# EUROPÄISCHE PATENTANMELDUNG

(11) **EP 1 892 202 A1**
(43) Veröffentlichungstag der Anmeldung: **27.02.2008**
(21) Anmeldenummer: 06017645.0
(22) Anmeldetag: 24.08.2006
(51) Int. Cl.: B65G 37/02, G06Q 10/00, B65G 1/137

(54) **Förderanlage mit aktiven Sensoren**

(71) Anmelder: SIEMENS AKTIENGESELLSCHAFT, 80333 München (DE)
(72) Erfinder: Schneider, Frank, 90480 Nürnberg (DE)

(57) **Zusammenfassung**

Erfindungsgemäß wird eines der Fördermittel (Y) oder Fördergüter (Z) einer Förderanlage mit mindestens einem aktiven Sensor (m) versehen. Hierdurch lässt sich die Fördertechnik unter Einsatz geringen Aufwands gewährleisten.

## Beschreibung

Die Erfindung betrifft eine Förderanlage mit mindestens einem Fördermittel und mit mindestens einem Fördergut, wobei mindestens eines der Fördermittel zur Förderung mindestens eines der Fördergüter dient.

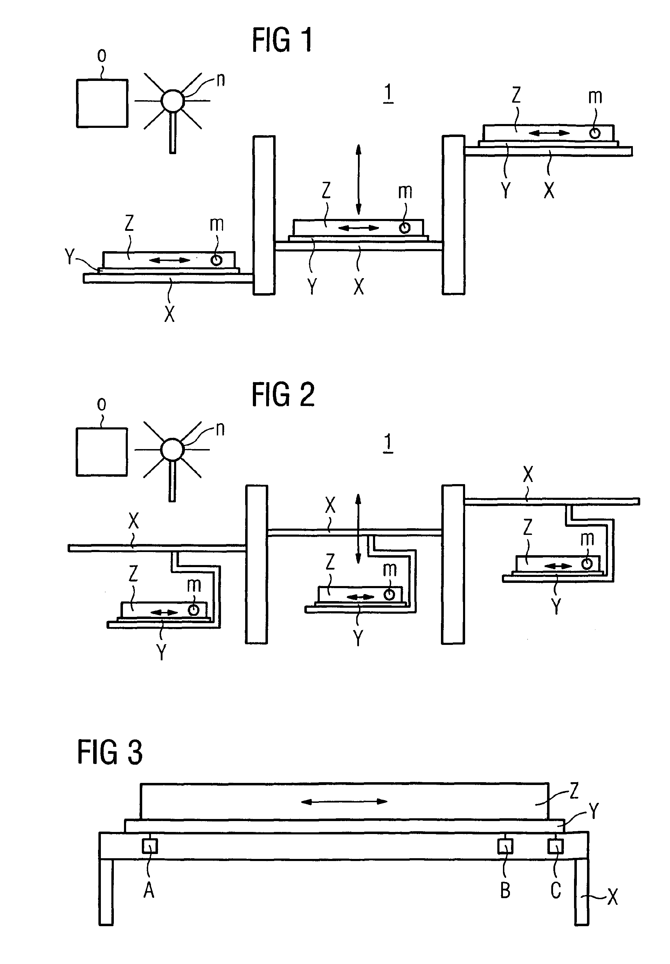

Eine derartige Förderanlage zur Förderung eines Fördermittels oder Fördergutes gehört zum Stand der Technik. Dabei ist eine Förderstrecke in einzelne Förderer X gegliedert, die z.B. gemäß FIG 3 aufgebaut sind. Unter einem Fördergut Z wird das zu befördernde Objekt verstanden. Das Fördermittel Y kann eine Trageinrichtung oder ein Objektträger sein, z.B. eine Palette, ein Werkstückträger, eine Hängevorrichtung, etc., mit der das Fördergut Z transportiert wird. Auf der Förderstrecke werden mittels der einzelnen Förderer X Fördermittel Y oder Fördergüter X in mindestens einer Förderrichtung übergeben. Im Prozess des Förderns werden einzelne Zustände des Fördermittels Y oder Fördergutes Z in der Bewegung oder in der Standposition überwacht. Auf einem aufgeständerten Förderer, z.B. einer Rollenbahn eines Gurt- oder Gliederförderers können folgende Zustände bei der Einfahrt des Fördermittels Y oder des Fördergutes X überwacht werden:
B - Umschalten von der Schnell- auf die Langsamfahrt
C - Positioniertes Stopp-Signal
A - Fördermittel oder Fördergut vorhanden

Der Förderer X kann auch reversibel ausgebildet sein, wobei das Prinzip der Ortung und der Positionierung erhalten bleibt.

Die oben genannten Zustände können auch bei einem Förderer, der als Lift ausgebildet ist, überwacht werden. Gleiches gilt für Drehtische, Eckumsetzer, Hubtische und alle weiteren Fördermittel, die eine translatorische vertikale, horizontale, schräge oder rotatorische Bewegung ausführen.

Zur Überwachung der Zustände sind nach dem bisherigen Stand der Technik stets eine Vielzahl von Überwachungs- und Positioniermitteln an den Fördermitteln erforderlich.

Die oben genannten Ortungs- und Positioniereinrichtungen A, B, C sind bisher in der Regel als Elemente der großen Familien von Sensoren bzw. Sensoreinrichtungen ausgebildet. Sie sind fest positioniert am Förderer, z.B. durch Verschraubung. Diese Elemente sind zu einem Verteiler oder Unterverteiler fest verkabelt. Von hier werden die Signale gesammelt und einem Steuerungsmedium zugeführt. Die dabei eingesetzten Sensoren bzw. Sensoreinrichtungen unterliegen Produktions- und Umwelteinflüssen, z.B. einem Verschleiß, der Verschmutzung bei nicht vorhandener Abdeckung und Erschütterungen mit entsprechenden Ausfällen in der Folge.

Weiterhin erfordert diese Ausführung einen hohen Aufwand in der mechanischen und elektrischen Installation. Eine unsachgemäße Installation kann eine Reihe von Fehlern im Betrieb nach sich führen.

Daher liegt der Erfindung die Aufgabe zugrunde, eine Förderanlage der oben genannten Art dahingehend zu verbessern, dass die Fördertechnik mit hoher Zuverlässigkeit unter Einsatz eines geringen Aufwandes gewährleistet wird.

Die Aufgabe wird gelöst durch eine Förderanlage mit den Merkmalen nach Anspruch 1. Hierzu weist die oben genannte Förderanlage weitere folgende Merkmale auf:
a) mit mindestens einem Fördergut oder Fördermittel, das mit einem aktiven Sensor versehen ist, der Mittel zur Aussendung von drahtlos übertragbaren Signalen aufweist,
b) mit einer Identifizierung und/oder Ortungseinrichtung sowie mit einer Steuer- oder Regelungseinrichtung, die zur Kommunikation mit der Identifizierungs- und/oder Ortungseinrichtung sowie zur Steuerung oder Regelung der Förderanlage dient und
c) wobei die Signale zum Orten und/oder Identifizieren durch die Identifizierungs- und/oder Ortungseinrichtung dienen.

Eine vorteilhafte Weiterbildung der Förderanlage besteht, wenn die Förderanlage durch eine Förderstrecke mit mehreren Förderern gekennzeichnet ist, die zur Übergabe mindestens eines der Fördermittel und/oder mindestens eines der Fördergüter dienen.

Ist der aktive Sensor als Transpondor in RFID-Technik ausgeführt, so stellt dies eine besonders kostengünstige Lösung dar.

Eine weitere vorteilhafte Ausbildung besteht, wenn die Signale des aktiven Sensors optische Signale sind.

Eine bevorzugte Weiterbildung der Erfindung besteht außerdem, wenn das Fördermittel als Hängevorrichtung ausgebildet ist.

Ist der Förderer vorteilhafterweise als Lift ausgeführt, so lässt sich auf einfache Weise auch eine vertikale Förderung des Fördermittels und/oder Fördergutes realisieren.

Ein Ausführungsbeispiel der Erfindung wird im Folgenden anhand einer Zeichnung näher erläutert. Es zeigen:
- FIG 1: eine Prinzipdarstellung einer erfindungsgemäßen Förderanlage mit translatorisch bewegten Fördermitteln und
- FIG 2: eine Prinzipdarstellung einer erfindungsgemäßen Förderanlage mit einer Hängevorrichtung als Fördermittel.

In FIG 1 ist eine Förderanlage dargestellt, deren Förderstrecke in einzelne Förderer X gegliedert ist. Jeder Förderer X weist ein Fördermittel Y auf, das zur Förderung ein Fördergut Z trägt. Auf der Förderstrecke werden mittels der einzelnen Förderer X Fördermittel Y oder Fördergüter Z in mindestens einer Förderrichtung übergeben. Im Prozess des Förderns werden einzelne Zustände des Fördermittels Y oder Fördergutes Z in der Bewegung oder in der Standposition überwacht. Zum Beispiel können dies folgende Zustände sein:
- Umschalten von der Schnell- auf die Langsamfahrt,
- Positioniertes Stopp-Signal,
- Fördermittel oder Fördergut vorhanden.

Als Fördermittel können auch kritische Eckumsetzer, Hubtische und alle weiteren Fördermittel, die eine translatorische Vertikale, Horizontale, Schräge oder rotatorische Bewegung ausführen, eingesetzt werden.

Zur Ortung und/oder Positionierung wird das Fördermittel Y oder das Fördergut Z mit einem aktiven Sensor m versehen. Dieser weist Mittel zur Aussendung von drahtlos übertragbaren Signalen auf. Weiterhin wird für die Ortung und Identifizierung des Fördermittels Y oder Förderguts Z eine Identifizierungs- und/oder Ortungseinrichtung n vorgesehen, die die Signale des aktiven Sensors m empfängt und auswertet. Die Identifizierungs- und/oder Ortungseinrichtung kommuniziert mit einer Steuer- oder Regelungseinrichtung o, die aufgrund der Ortung des Fördermittels Y oder des Fördergutes Z die Antriebsmittel für das betreffende Fördermittel Y steuert oder regelt. Über die aktiven Sensoren m ist eine ständige Identifizierung und/oder Ortung und/oder Steuerung aller Fördermittel Y sowie Fördergüter Z zum Zeitpunkt des Stehens oder Förderns möglich. Dabei ist nur jeweils ein aktiver Sensor m pro Fördermittel Y bzw. Fördergut Z erforderlich. Vorteilhafterweise wird hier RFID-Technik (**R**adial **F**requency **I**dentification) angewandt, d.h. als aktiver Sensor wird ein Transponder m in RFID-Technik eingesetzt. Alternativ kommen z.B. auch optische Sensoren in Frage, die dann optische Signale an die Identifizierungs- und/oder Ortungseinrichtung n aussenden.

Dieses Prinzip der Identifizierung und/oder Ortung und/oder Steuerung gilt für jegliche Art des Förderns unter anderem translatorische vertikale, horizontale, schräge oder rotatorische Bewegung. Auch alternative Ausprägungen mit Rollen, Gleiten, Schieben, Rutschen, Hängen, Drehen, etc. Alle reversiblen Ausprägungen der Förderungen sind ebenso denkbar.

FIG 2 zeigt ein Ausführungsbeispiel in dem als Fördermittel eine Hängevorrichtung Y eingesetzt ist. Ansonsten ist die Ausrüstung zur Ortung und/oder Positionierung bei der Förderanlage entsprechend dem Ausführungsbeispiel gemäß FIG 1. Auch hier werden die Fördermittel Y oder die darauf angeordneten Fördergüter Z mit einem aktiven Sensor m versehen.

Durch einen Aufbau der Förderanlagen 1 gemäß FIG 1 und 2 ergeben sich viele Vorteile. So ist zum Beispiel nur ein Sensor oder ein Transponder pro Fördermittel Y oder Fördergut Z erforderlich. Es ist eine hoch flexible und freie Identifizierung und/oder Ortung und/oder Steuerung möglich. Durch Einsparung einer Vielzahl von Arbeitsschritten bei der Installation und Montage können erhebliche Kosten eingespart werden. Weiterhin ist eine ständige zentrale Positionserfassung und/oder Ortung und/oder Steuerung aller Teilnehmer möglich, d.h. die Streuerstrategie ist flexibel änderbar.

Besondere Vorteile bei der Installation und Montage ergeben sich dadurch, dass Halterungen für Sensoren entfallen und aufgrund der drahtlosen Kommunikationsverbindung kein Verkabelungsaufwand erforderlich ist.

Die erforderlichen Sensoren sind einfach und kostengünstig.
Einstellungsarbeiten für die Justage und Feinjustage von Sensoren entfallen.

Auch hinsichtlich Produktions- und Umwelteinflüssen ist die vorgeschlagene erfindungsgemäße Lösung günstig, da zum Beispiel nach starken Vibrationen der ansonsten erforderliche Aufwand für eine mechanische Korrektur entfällt. Es können bei der Drahtlos-Lösung kein Verkabelungsfehler entstehen und die Fördergüter können nicht in den Bereich der Sensoren ragen und dort Beschädigungen verursachen. Weiterhin können unterschiedliche Massen von Fördergütern flexibel über die aktive Sensorik geortet und/oder positioniert und/oder gesteuert werden, so dass z.B. immer die gleiche Stopp-Position erreicht wird.

## Patentansprüche

1. Förderanlage (1) mit mindestens einem Fördermittel (Y) und mindestens einem Fördergut (Z), wobei mindestens eines der Fördermittel (Y) zur Förderung mindestens eines der Fördergüter (Z) dient, und mit folgenden Merkmalen:
a) mindestens eines der Fördergüter (Z) oder Fördermittel (Y) ist mit einem aktiven Sensor (m) versehen, der Mittel zur Aussendung von drahtlos übertragbaren Signalen aufweist,
b) mit einer Identifizierung und/oder Ortungseinrichtung (n) sowie mit einer Steuer- oder Regelungseinrichtung (o), die zur Kommunikation mit der Identifizierungs- und/oder Ortungseinrichtung (n) sowie zur Steuerung oder Regelung der Förderanlage dient,
c) wobei die Signale zum Orten und/oder Identifizieren durch die Identifizierungs- und/oder Ortungseinrichtung (n) dienen.

2. Förderanlage nach Anspruch 1, **gekennzeichnet durch** eine Förderstrecke mit mehreren Förderern (X), die zur Übergabe mindestens eines der Fördermittel (Y) und/oder mindestens eines der Fördergüter (Z) dienen.

3. Förderanlage nach Anspruch 1 oder 2, **dadurch gekennzeichnet, dass** der aktive Sensor als Transponder (m) in RFID-Technik ausgeführt ist.

4. Förderanlage nach einem der vorangehenden Ansprüche, **dadurch gekennzeichnet, dass** die Signale des aktiven Sensors (m) optische Signale sind.

5. Förderanlage nach einem der vorangehenden Ansprüche, **dadurch gekennzeichnet, dass** das Fördermittel (Y) als Hängevorrichtung ausgebildet ist.

6. Förderanlage nach einem der vorangehenden Ansprüche, **dadurch gekennzeichnet, dass** einer der Förderer (X) als Lift ausgeführt ist.
